# FASCICULE DE BREVET EUROPEEN

(11) **EP 1 418 478 B1**
(45) Date de publication et mention de la délivrance du brevet: **11.04.2007**
(21) Numéro de dépôt: 03292576.0
(22) Date de dépôt: 16.10.2003
(51) Int. Cl.: G05B 19/12, G06F 3/00, G01M 15/00, G01R 31/00

(54) **Appareil de lecture de connecteurs d'identification**
Gerät zum Lesen eines Identifkationsverbinders
Apparatus for reading identification connectors

(30) Priorité: 21.10.2002 FR 0213094
(43) Date de publication de la demande: 12.05.2004
(73) Titulaire: HISPANO SUIZA, 92707 Colombes Cedex (FR); SNECMA SERVICES, 75015 Paris (FR)
(72) Inventeur: Bregaint, Christian, 77176 Nandy (FR); Cheminot, Patrice, 77870 Vulaines sur Seine (FR); Druesne, Jean.Marc, 77810 Thomery (FR); Menguy, Roger, 77950 Voisenon (FR)
(74) Mandataire: Joly, Jean-Jacques

(56) Documents cités:
- EP-A- 0 366 854
- EP-A- 1 151 920
- EP-A- 1 246 345
- US-A- 4 571 488
- US-A- 4 720 253
- US-A- 5 014 794
- US-B1- 6 407 554

## Description

### Domaine de l'invention

La présente invention se rapporte au domaine des connecteurs d'identification utilisés notamment dans les moteurs d'avions dans le paramétrage du calculateur moteur. L'invention concerne plus particulièrement un appareil pour lire le contenu de tels connecteurs avant l'assemblage du moteur à l'avion. L'invention peut être utilisée pour vérifier la programmation des champs modifiables par un opérateur.

### Arrière plan de l'invention

Aujourd'hui, dans l'industrie aéronautique, afin de mieux maîtriser les coûts de développement et de fabrication des moteurs, on conçoit un moteur dit "de base" à partir duquel des familles et versions de moteurs spécifiques sont déclinées. De la même façon, les fabricants de calculateurs ont défini un seul type de calculateur par moteur de base qui est capable de fonctionner avec les familles et versions de moteurs dérivées.

Aussi, le calculateur doit être paramétré en fonction de la famille et de la version du moteur considéré. A cet effet, on utilise un connecteur d'identification qui est solidaire du moteur et qui est connecté au calculateur. Ce connecteur d'identification contient les informations (sous forme codée binaire) relatives aux caractéristiques du moteur qui vont être utilisées par le calculateur.

La figure 8 illustre un exemple d'un connecteur d'identification considéré dans la présente invention. Le connecteur d'identification 100 comprend une pluralité de broches 101 qui sont reliées entre elles à l'intérieur du connecteur par un circuit électrique (non représenté) reprogrammable ou non.

Dans le cas d'un circuit électrique non reprogrammable, celui-ci est formé de composants discrets, tels que des pistes à fusibles, qui relient les broches du connecteur. De façon connue, la codification des informations dans le connecteur s'effectue en faisant fondre certaines pistes à fusibles. Ainsi, à chaque broche du connecteur correspond une donnée binaire (0 ou 1). Une fois le connecteur installé sur le moteur (i.e. connecté au calculateur), le calculateur interprète, en binaire, le schéma électrique défini dans le connecteur afin d'acquérir les caractéristiques du moteur.

Dans le cas d'un circuit électrique reprogrammable, la donnée binaire peut être déterminée par un commutateur par exemple.

La fiabilité des informations contenues dans le connecteur d'identification est d'une importance capitale d'autant plus que les connecteurs ont des clés de détrompage identiques pour pouvoir être installés sur tous les calculateurs. En effet, c'est le connecteur d'identification qui va autoriser ou interdire certaines caractéristiques de fonctionnement propres à chaque famille et version de moteurs. Par exemple, une version ou famille de moteur définie pour une poussée maximale de 20 000 livres peut-être équipée d'un connecteur autorisant une poussée jusqu'à 22 000 livres ou limitant la poussée à 18000 livres. Sachant que certains éléments du moteur ne sont pas adaptés pour une poussée au-delà de 20 000 livres, ou qu'avec une poussée de 18000 livres on peut empêcher le décollage, une telle erreur peut avoir de graves conséquences.

L'opération de lecture du connecteur d'identification permet de s'assurer, avant le montage du moteur sous l'aile de l'avion, des caractéristiques du moteur. Ainsi, il est possible d'effectuer un contrôle des choix réalisés à partir des livrets moteur et d'éviter des montages intempestifs inadmissibles vis-à-vis des temps d'immobilisation et des coûts engendrés.

Il existe à l'heure actuelle deux possibilités pour lire les informations contenues dans un connecteur d'identification. La première possibilité consiste à lire manuellement les données brutes (i.e. binaires) présentes dans le connecteur. Cette opération est effectuée par un opérateur qui relève à l'aide d'un ohmmètre la valeur mesurée sur chaque contact du connecteur. Une fois toutes les données relevées, l'opérateur décode ces informations au moyen des documents constructeurs pour vérifier la concordance entre les informations codées dans le connecteur d'identification et les caractéristiques du moteur auquel il doit être associé. Cette première solution constitue une opération manuelle fastidieuse qui implique des risques d'erreur et de détérioration lors des mesures par l'opérateur notamment du fait de la proximité des contacts dans le connecteur.

La seconde possibilité actuellement connue pour valider les données contenues dans un connecteur d'identification consiste à monter le moteur, avec le calculateur équipé du connecteur d'identification, sous l'aile de l'avion afin de lire les informations codées dans le connecteur par l'intermédiaire de l'ordinateur de bord. Cette solution est encore plus fastidieuse que la première décrite ci-dessus. Le montage et le démontage du moteur sur l'avion entraînent des coûts en terme de temps et de main d'oeuvre qui ne sont pas admissibles dans ce type d'industrie.

Le document EP-A-0 366 854 décrit un appareil d'analyse d'échantillons sanguins contenus dans des poches. Un connecteur est attaché à chaque poche et renferme un circuit mémoire PROM dans lequel sont enregistrées des informations relatives à l'échantillon. Ces informations peuvent être lues par l'appareil d'analyse en connectant le connecteur de la poche à un connecteur de branchement prévu sur l'appareil.

### Objet et résumé de l'invention

La présente invention vise à remédier aux inconvénients précités et à réaliser un dispositif qui permet de lire de façon plus fiable, plus rapide et sans risque de dégradation les informations contenues dans un connecteur d'identification et ceci sans démonter d'autres pièces du moteur.

Ces buts sont atteints grâce à un appareil de lecture de connecteurs d'identification pour moteur comprenant une pluralité de contacts reliés à un circuit de décodage, chaque contact correspondant à une donnée binaire et une ou plusieurs desdites données binaires correspondant à des informations relatives aux caractéristiques du moteur, l'appareil de lecture comprenant des moyens de branchement aptes à recevoir au moins un connecteur d'identification, des organes de commande, un dispositif d'affichage et des moyens de traitement, caractérisé en ce que les moyens de branchement sont reliés aux moyens de traitement qui réagissent aux organes de commande pour afficher les informations contenues dans le connecteur sur le dispositif d'affichage, et en ce que les moyens de traitement de l'appareil de lecture sont programmés pour adresser un ou plusieurs contacts du connecteur d'identification branché sur l'appareil pour obtenir la donnée binaire de l'élément discret relié à chaque contact interrogé, les moyens de traitement comprenant des moyens logiciels pour décoder les informations relatives aux caractéristiques du moteur à partir des données binaires lues sur le ou les contacts du connecteur d'identification.

Ainsi, la présente invention propose un appareil qui permet de lire en clair les informations contenues dans un connecteur d'identification. Un opérateur peut par conséquent vérifier en tous lieux et à tous moments la compatibilité des informations du connecteur se référant aux caractéristiques du moteur sur lequel il doit être branché.

Selon un aspect particulier de l'invention, les organes de commande comprennent un ou plusieurs boutons pour commander l'affichage des informations codées dans le connecteur d'identification branché sur l'appareil de lecture, chaque information étant successivement affichée en réponse à une pression sur le bouton. Alternativement, dans une version automatisé de l'appareil de lecture, les organes de commande peuvent être des moyens logiciels permettant l'affichage des informations les unes après les autres, ou bien toutes ensembles sur un dispositif d'affichage adapté.

Le connecteur d'identification peut être un connecteur multibroche. Dans ce cas, les moyens de branchement de l'appareil de lecture comprennent au moins un connecteur multibroche apte à recevoir le connecteur d'identification.

Selon un mode de réalisation de l'invention, les moyens de branchement comprennent au moins un connecteur pour recevoir chacun au moins un modèle de connecteur d'identification spécifique.

Les moyens de traitements comprennent des moyens logiciels pour détecter le modèle du connecteur d'identification branché sur l'appareil.

Les moyens de traitements peuvent comprendre également des moyens logiciels pour effectuer un test de parité du circuit de codage du connecteur d'identification.

Selon une caractéristique de l'invention, l'appareil de lecture comprend au moins un connecteur de protection comprenant un circuit d'autotest. A cet effet, les moyens de traitement comprennent des moyens logiciels pour effectuer un test de l'appareil de lecture à partir du circuit d'autotest du connecteur de protection. Les organes de commande peuvent comprendre au moins un bouton pour commander l'affichage du résultat du test de l'appareil de lecture ou des moyens logiciels d'affichage automatique du résultat comme décrits plus haut.

Selon une caractéristique de l'invention, l'appareil de lecture peut être équipé de moyen de liaison pour mettre à jour les logiciels décrits ci-dessus.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue en perspective de l'appareil de lecture de connecteurs d'identification conformément à un mode de réalisation de l'invention,
- la figure 2 est une vue en perspective d'une partie de l'appareil de lecture conformément à un mode de réalisation de l'invention,
- la figure 3 est une vue schématique de face d'un connecteur d'identification montrant un exemple de disposition des broches de contact,
- la figure 4 est une vue en perspective d'une partie de l'appareil de lecture munie de connecteurs d'autotest conformément à un mode de réalisation de l'invention,
- la figure 5 est une vue schématique du circuit de contrôle de l'appareil de lecture selon un mode de réalisation de l'invention,
- la figure 6 est un organigramme montrant les étapes de lecture et de vérification des connecteurs d'identification conformément à un mode de réalisation de l'invention,
- la figure 7 est un organigramme montrant les étapes d'une procédure de test de l'appareil de lecture conformément à un mode de réalisation de l'invention,
- la figure 8 est une perspective en vue partielle d'un exemple de connecteur d'identification pour moteur d'avion.

### Description détaillée d'un mode de réalisation

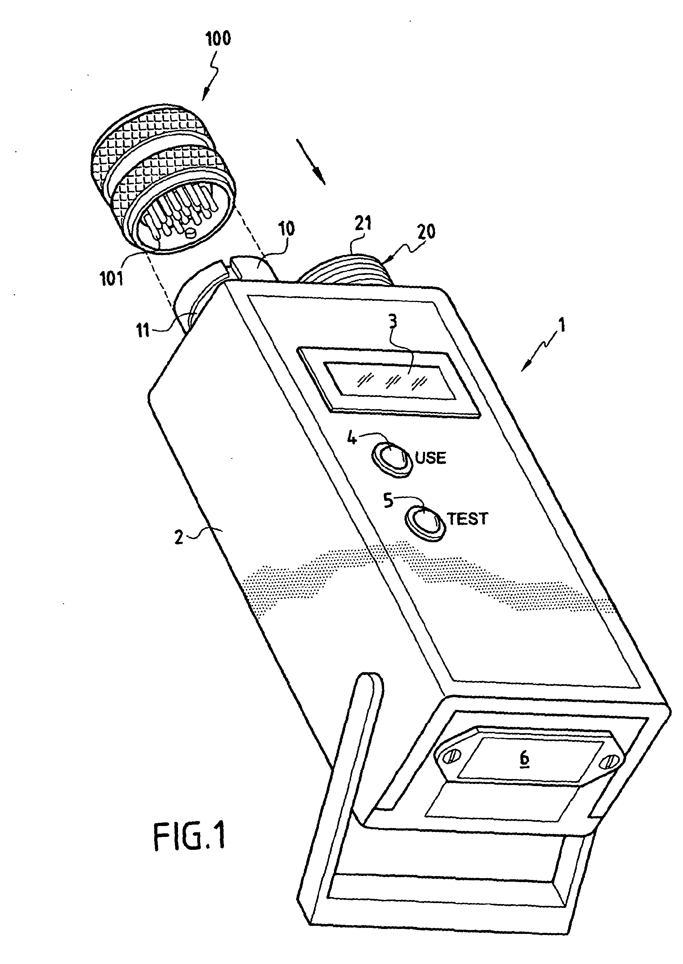

La figure 1 représente un appareil de lecture 1 de connecteurs d'identification selon l'invention présenté du côté de sa face supérieure. L'appareil de lecture 1 est formé d'un boîtier 2 qui comprend deux boutons 4 et 5 ainsi qu'un afficheur 3 tel qu'un écran LCD par exemple. Les boutons 4 et 5 servent de moyens de commande à l'opérateur pour visualiser des informations sur l'afficheur 3. Le boîtier 2 comprend également deux connecteurs 10 et 20 destinés à recevoir et à s'adapter avec des connecteurs d'identification 100. L'appareil de lecture selon l'invention étant portatif, le boîtier 2 comprend en outre des moyens d'alimentation autonome, comme par exemple quatre piles de 1,5 volts, qui sont logées dans un tiroir 6 à l'intérieur du boîtier 2. Selon une variante, le tiroir 6 peut constituer un logement pour une batterie rechargeable. Dans ce cas, le tiroir 6 peut comprendre des moyens pour connecter un chargeur à la batterie.

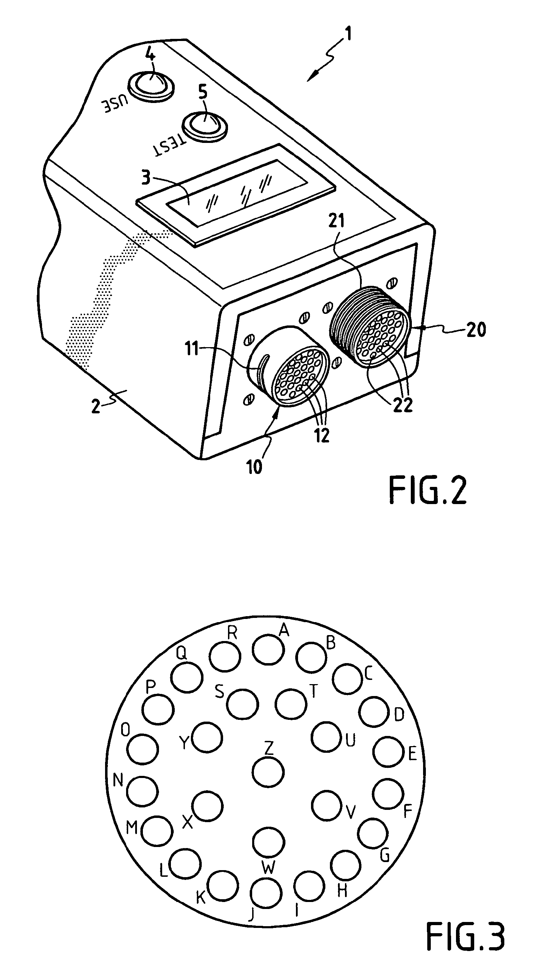

La figure 2 montre la partie de l'appareil de lecture qui reçoit le ou les connecteurs d'identification à tester. A cet effet, le boîtier 2 comprend sur sa face avant deux connecteurs 10 et 20 (mâles ou femelles suivant les cas) solidaires de ce dernier. Comme illustré en figure 8, le connecteur d'identification 100 se présente sous la forme d'un connecteur mâle qui comprend une pluralité de broches 101 disposées à l'intérieur d'un corps 105. Suivant les cas, le connecteur 100 peut être aussi un connecteur femelle. Le corps 105 du connecteur renferme le circuit électrique de codage des données qui est relié aux extrémités non visibles des broches 101. La partie du corps 105 qui entoure les broches 101 est formée d'une bague 103 qui est libre en rotation. Dans le mode de réalisation de connecteur d'identification illustré en figure 8, la bague 103 comporte des baïonnettes 104 destinées à coopérer avec des gorges 11 du connecteur 10 correspondant. Toutefois, suivant le modèle du connecteur, les moyens de fixation peuvent être de formes variées comme par exemple un filetage. Dans ce cas, comme illustré pour le connecteur 20 de l'appareil représenté en figure 2, le connecteur comportera un filetage 21 correspondant pour visser le connecteur d'identification. Les connecteurs 10 et 20 comprennent chacun respectivement une pluralité de cavités de contact 12 et 22 destinées à recevoir les broches du connecteur et établir ainsi une connexion électrique entre l'appareil de lecture 1 et le circuit de codage du connecteur d'identification.

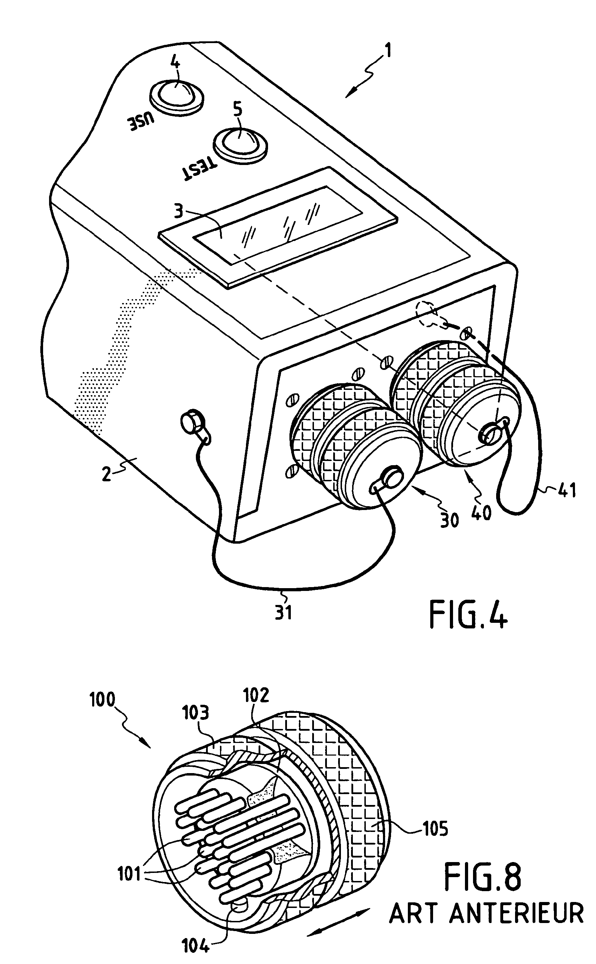

Lorsque l'appareil de lecture 1 n'est pas utilisé, les connecteurs 10 et 20 sont munis respectivement de connecteurs de protection 30 et 40 tels que représentés en figure 4. Chaque connecteur de protection 30, respectivement 40, est attaché de façon permanente au boîtier 2 par un système d'attache 31, respectivement 41, tel qu'un câble ou similaire. En outre de leur fonction de protection, les connecteurs 30 et 40 renferment un circuit de décodage qui contient des informations permettant d'effectuer un autotest de l'appareil de lecture comme expliqué plus loin en détail. A cet effet, le circuit de décodage peut consister par exemple en un circuit vierge où tous les éléments discrets sont à 1. Cette fonctionnalité des connecteurs de protection permet à l'opérateur de contrôler le bon fonctionnement de l'appareil de lecture avant une opération de lecture de connecteurs d'identification à vérifier.

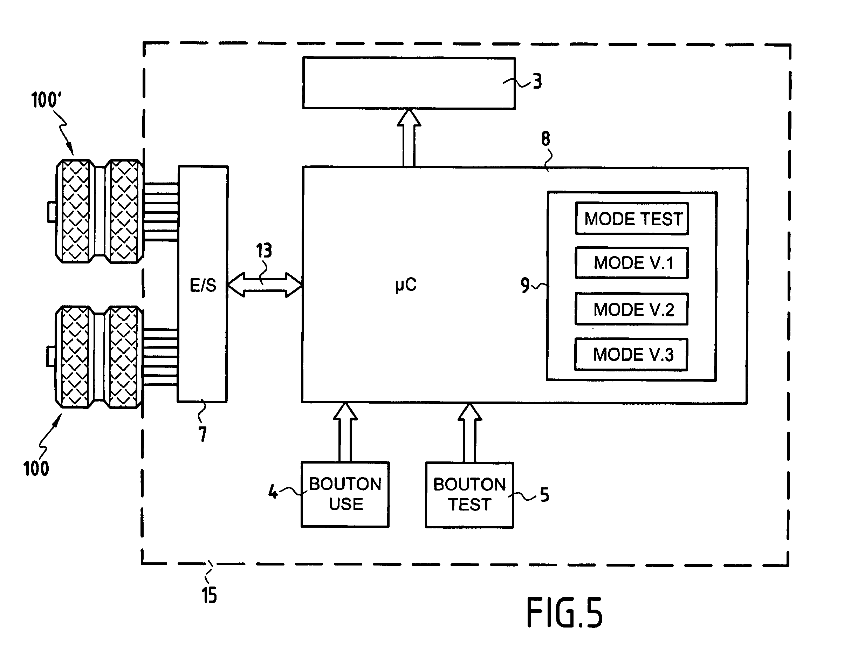

La figure 5 montre les principaux composants qui sont mis en oeuvre dans le circuit électronique de l'appareil de lecture de la présente invention. Le circuit 15 comprend un microcontrôleur 8 qui implémente des programmes stockés dans une unité de mémoire 9 associée. Dans l'exemple illustré, l'unité de mémoire 9 contient principalement un programme de lecture (MODE TEST) pour des connecteurs équipés d'un circuit d'autotest et trois programmes de lecture (MODE V.1, V.2 et V.3) de connecteurs d'identification correspondant chacun à un modèle de connecteur spécifique.

L'appareil selon l'invention peut comprendre avantageusement des moyens de liaison (non représentés), telle q'un port série RS232, reliés au microcontrôleur pour mettre à jour les programmes dans l'appareil.

Le microcontrôleur 8 effectue la lecture des données contenues dans les connecteurs d'identification par l'intermédiaire d'un bus 13 et d'une interface d'entrée/sortie 7 qui peut être formée d'une matrice à diode par exemple. Plus précisément, à chaque pression d'un opérateur sur une des touches 4 ou 5 le microcontrôleur 8 va lire et décoder les données binaires du connecteur d'identification correspondant à l'information demandée par le programme. Une fois les données décodées, le microcontrôleur visualise sur l'afficheur 3 l'information correspondante.

Alternativement, dans une version automatisé de l'appareil de lecture, les organes de commande peuvent être des moyens logiciels permettant l'affichage des informations les unes après les autres ou bien toutes ensembles sur un dispositif d'affichage de taille adaptée.

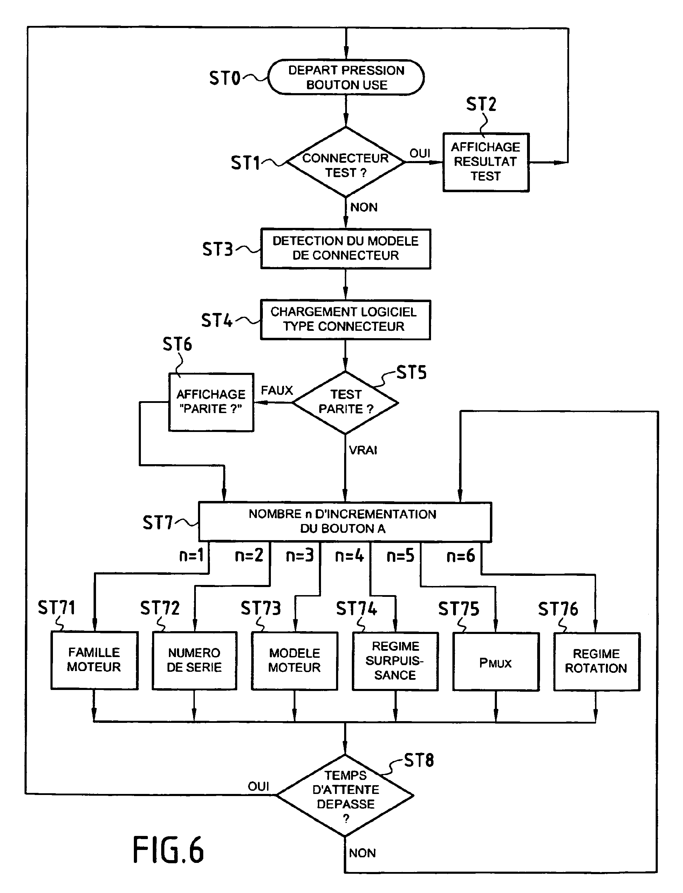

Le procédé de lecture des informations contenues dans un connecteur d'identification mis en oeuvre dans l'appareil selon l'invention va être décrit en relation avec la figure 6.

Comme décrit ci-dessus, l'affichage des informations s'effectue successivement après chaque pression d'un opérateur sur un des boutons 4 ou 5. Pour l'opération de lecture des informations contenues dans un connecteur d'identification à vérifier, l'opérateur utilise uniquement la touche "USE" 4. Ainsi, après avoir placé un connecteur d'identification sur un des connecteurs femelles de l'appareil, l'opérateur appuie une première fois sur la touche "USE" 4 dans une étape initiale ST0 qui va lancer le déroulement du programme principal dans le microcontrôleur. Dans une étape ST1, le programme détecte si le connecteur en place est un connecteur de protection avec un circuit d'autotest comme pour les connecteurs 30 et 40 présentés en figure 4. Si tel est le cas, le résultat de l'autotest est visualisé sur l'afficheur 3 dans une étape ST2. L'opération d'autotest de l'appareil sera décrit en détail plus loin.

Pour détecter la présence de connecteurs, l'appareil relève les valeurs binaires sur les contacts des connecteurs 10 et 20. Si toutes les valeurs sont à 0 alors il n'y a aucun connecteur branché.

Si le circuit du connecteur détecté n'est pas reconnu comme un circuit d'autotest, on passe à l'étape ST3 qui consiste à détecter le modèle du connecteur d'identification présent afin d'exécuter le programme de lecture d'informations approprié. Comme pour toutes les informations contenues dans le connecteur, l'information relative à la version du connecteur s'obtient par interrogation d'un ou plusieurs éléments discrets du circuit reliés aux broches du connecteur qui forment un code qui sera interprété par le programme pour décoder et visualiser la version du moteur concerné. Plus précisément, chaque broche du connecteur est identifiée sous une référence unique (ex. une lettre). Ainsi, en adressant une ou plusieurs broches, le microcontrôleur pourra obtenir la ou les données binaires qu'il doit interpréter pour obtenir l'information.

A titre d'exemple, dans une même gamme de moteurs, on trouve plusieurs modèles de moteurs à chacun desquels correspond un connecteur d'identification spécifique. Chacun des connecteurs contient un circuit de décodage qui définit des caractéristiques propres au modèle du moteur telles que le régime de surpuissance autorisé, les options de régulation, la vitesse de rotation de l'arbre moteur.... Toutes ces caractéristiques sont codées en binaires dans les éléments discrets du connecteur d'identification. La figure 3 montre un exemple de connecteur d'identification pour moteurs comprenant 26 broches chacune référencée par une lettre allant de A à Z. Dans cet exemple, on considère que le connecteur 20 de la figure 2 est apte à recevoir les connecteurs d'identification pour deux modèles de moteurs différents alors que le connecteur 10 ne reçoit que des connecteurs d'identification pour un même modèle de moteur. Ainsi, par exemple, sur le connecteur 10, la valeur de l'élément discret relié à la broche W déterminera le modèle du moteur qui correspond au connecteur en place. En d'autres termes, si W=0 alors le connecteur est un modèle V.1 et si W=1 le connecteur correspond au modèle V.2 par exemple.

De par le connecteur 10 ou 20 occupé et, le cas échéant, selon des données mesurées sur le connecteur d'identification, le modèle (V.1, V.2 ou V.3) du connecteur d'identification est reconnu par le microcontrôleur qui va alors charger, à partir de l'unité de mémoire 9, le logiciel de lecture des informations correspondant (étape ST4).

Le logiciel initie tout d'abord une étape ST5 de vérification de parité qui consiste à additionner toutes ou certaines valeurs binaires contenues dans le connecteur. Si un problème de parité est détecté, le microcontrôleur affichera alors un message "PARITE ?" (étape ST6) sur l'afficheur 3 afin d'en informer l'opérateur. L'opération de lecture et de vérification des informations contenues dans le connecteur d'identification par l'opérateur peut alors débuter dans une étape ST7 où le nombre d'incrémentations effectuées par l'opérateur sur le bouton "USE" 4 est mémorisée. En effet, à chaque pression sur le bouton "USE", l'opérateur affichera successivement toutes les informations contenues dans le connecteur selon un ordre défini par le logiciel. Sur l'exemple de la figure 6, le logiciel chargé dans le microcontrôleur affichera successivement les informations en fonction de la valeur n d'incrémentations du bouton. Dans cet exemple six messages d'information sont affichés dans des étapes ST71 à ST76. Ils correspondent respectivement à la famille du moteur (n=1), au numéro de série de celui-ci (n=2), à son modèle (n=3), au régime de surpuissance qu'il autorise (n=4), au type de liaison de son régulateur (n=5) et au régime de rotation de l'arbre haute pression (n=6). Plus précisément, à chaque pression sur le bouton, l'afficheur 3 indique le nom du paramètre suivi de sa valeur ou de sa caractéristique. Si une des informations ne peut être lue (codage non reconnu), un message d'erreur sera affiché à la place de l'information correspondante indiquant ainsi à l'opérateur que le connecteur n'est pas valide.

Lorsqu'un problème de parité a été détecté, le message "PARITE ?" continuera de s'afficher alternativement avec les informations lues dans le connecteur. D'autre part, dans une étape ST8, si la durée entre deux pressions sur le bouton est supérieure à une durée déterminée, ce dernier revient à la l'étape initiale ST0 qui correspond à l'état de veille de l'appareil.

Le microcontrôleur 8 contient également dans son unité de mémoire 9 un programme qui, en association avec des connecteurs de protection équipés d'un circuit d'autotest (ex. circuit vierge avec les éléments discrets à 1), permet de réaliser un autotest de l'appareil de lecture 1. Cette opération d'autotest de l'appareil est utile dans tous les cas où il peut y avoir un doute sur son fonctionnement (ex. problème de parité systématique). L'autotest est également utile pour contrôler l'appareil après une modification (ex. remplacement de microcontrôleur ou piles).

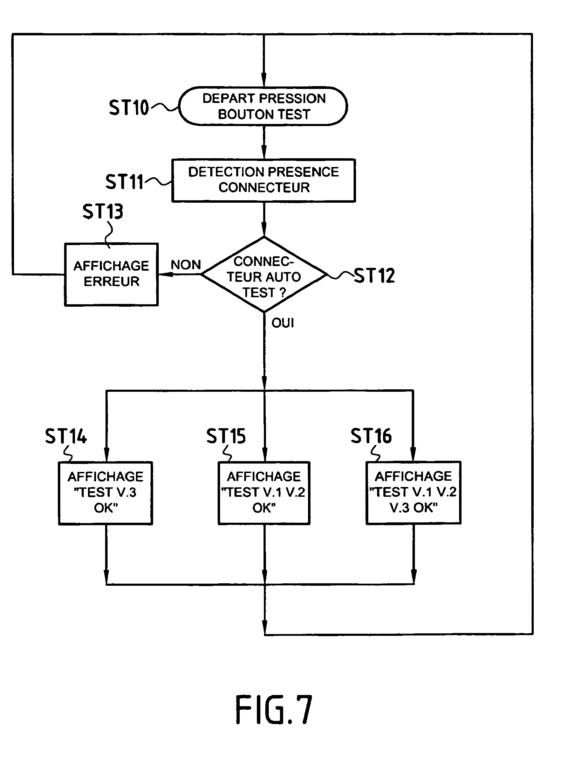

La figure 7 illustre les étapes de l'opération d'autotest de l'appareil. Après avoir pressé sur le bouton 5 "TEST" de l'appareil de lecture le programme "MODE TEST" est exécuté à partir de l'unité de mémoire 9 dans le microcontrôleur (étape ST10). Ce programme d'autotest est également exécuté dans le microcontrôleur lorsque qu'un connecteur de protection avec un circuit d'autotest est détecté dans l'étape ST1 de la figure 5.

Dans une étape ST11, le programme détecte l'emplacement du connecteur sur l'appareil. Comme pour l'exemple décrit précédemment à la figure 5 en relation avec l'appareil illustré à la figure 2, le connecteur 20 de la figure 2 est apte à recevoir les connecteurs d'identification versions V.1 et V.2 alors que le connecteur 10 ne reçoit que des connecteurs d'identification version V.3. Une fois un connecteur détecté, une étape ST12 de vérification de la présence d'un connecteur d'autotest est initiée. Si le connecteur présent n'est pas détecté comme étant un connecteur de test (i.e. si tous ou certains éléments discrets ne sont pas à 1), un message d'erreur est affiché sur l'appareil (étape ST13). Si le connecteur en place sur l'appareil est bien détecté comme un connecteur d'autotest (i.e. tous les éléments discrets à considérés sont à 1), un message de résultat de test est affiché. Selon la présence d'un ou deux connecteurs sur l'appareil, ce dernier affichera le message correspondant. Dans l'exemple considéré, si un seul connecteur est branché sur le connecteur 10, qui ne reçoit que des connecteurs d'identification type V.3, le message "TEST V.3 OK" sera affiché (étape ST4). Si un seul connecteur est branché sur le connecteur 20, qui ne reçoit que des connecteurs d'identification type V.1 ou V.2, le message "TEST V.1 V.2 OK" sera affiché (étape ST5). Enfin, Si deux connecteurs d'autotest sont branchés sur les deux prises 10 et 20 de l'appareil, le message "TEST V.1 V.2 V.3" sera affiché (étape ST6).

Ainsi, l'appareil de lecture selon la présente invention constitue un outil plus fiable et plus pratique que les méthodes de contrôle manuelles qui permet de lire en tous lieux et à tous moments les informations contenues dans un connecteur d'identification afin de s'assurer de leur compatibilité avec les caractéristiques du moteur sur lequel le connecteur est ou doit être installé. Les informations (nom du paramètre et son attribut) sont directement affichées en clair, ce qui facilite la tâche de vérification pour l'opérateur.

## Revendications

1. Appareil de lecture (1) de connecteurs d'identification (100) adapté pour un moteur d'avion, ledit connecteur comprenant une pluralité de contacts (101) reliés à un circuit de décodage, chaque contact correspondant à une donnée binaire, une ou plusieurs desdites données binaires correspondant à des informations relatives aux caractéristiques du moteur, ledit appareil comprenant des moyens de branchement (10, 20) aptes à recevoir au moins un connecteur d'identification, des organes de commande (4,5), un dispositif d'affichage (3) et des moyens de traitement,
**caractérisé en ce que** lesdits moyens de branchement sont reliés aux moyens de traitement (8) qui réagissent aux organes de commande pour afficher les informations contenues dans le connecteur sur le dispositif d'affichage (3) et **en ce que** lesdits moyens de traitement (8) de l'appareil de lecture (1) sont programmés pour adresser un ou plusieurs contacts du connecteur d'identification branché sur ledit appareil pour obtenir la donnée binaire de l'élément discret relié à chaque contact interrogé, lesdits moyens de traitement comprenant des moyens logiciels pour décoder les informations relatives aux caractéristiques du moteur à partir des données binaires lues sur le ou les contacts du connecteur d'identification (100).

2. Appareil selon la revendication 1, **caractérisé en ce que** les organes de commande comprennent au moins un bouton (4) pour commander l'affichage des informations codées dans le connecteur d'identification (100) branché sur l'appareil de lecture (1), chaque information étant successivement affichée en réponse à une pression sur ledit bouton.

3. Appareil selon la revendication 1, **caractérisé en ce que** les organes de commande comprennent des moyens logiciels permettant l'affichage automatique des informations.

4. Appareil selon l'une quelconque des revendications 1 à 3, **caractérisé en ce que** le connecteur d'identification (100) est un connecteur multibroche et **en ce que** les moyens de branchement dudit appareil comprennent au moins un connecteur multibroche (10) apte à recevoir ledit connecteur d'identification.

5. Appareil selon l'une quelconque des revendications 1 à 4, **caractérisé en ce que** les moyens de branchement comprennent au moins un connecteur (10) pour recevoir respectivement au moins un modèle de connecteur d'identification spécifique.

6. Appareil selon l'une quelconque des revendications 1 à 5, **caractérisé en ce que** les moyens de traitement (8) comprennent des moyens logiciels (9) pour détecter le modèle du connecteur d'identification branché sur l'appareil.

7. Appareil selon l'une quelconque des revendications 1 à 6, **caractérisé en ce que** les moyens de traitements (8) comprennent des moyens logiciels (9) pour effectuer un test de parité du circuit de codage du connecteur d'identification.

8. Appareil selon l'une quelconque des revendications 1 à 7, **caractérisé en ce qu'**il comprend au moins un connecteur de protection (30) comprenant un circuit d'autotest.

9. Appareil selon la revendication 8, **caractérisé en ce que** les moyens de traitement (8) comprennent des moyens logiciels pour effectuer un test dudit appareil de lecture à partir du circuit d'autotest du connecteur de protection (30).

10. Appareil selon la revendication 9, **caractérisé en ce que** les organes de commande comprennent au moins un bouton (5) pour commander l'affichage du résultat du test de l'appareil de lecture.

11. Appareil selon la revendication 9, **caractérisé en ce que** les organes de commande comprennent des moyens logiciels pour commander automatiquement l'affichage du résultat du test de l'appareil de lecture.

12. Appareil selon l'une quelconque des revendications 1 à 11, **caractérisé en ce qu'**il comprend des moyens de mise à jour des moyens de traitements.

13. Appareil selon l'une quelconque des revendications 1 à 12, **caractérisé en ce qu'**il comprend des moyens d'alimentation autonome (6).

## Claims

1. A reader appliance (1) for reading identification connectors (100) suitable for airplane engines, said connector comprising a plurality of contacts (101) connected to a decoding circuit, each contact corresponding to a binary digit, one or more of said binary digits corresponding to information relating to characteristics of the engine, said appliance including connection means (10, 20) suitable for receiving at least one identification connector, control members (4, 5), a display device (3) and processor means,
the appliance being **characterised in that** said connection means are connected to processor means (8) responding to control members in order to display on the display device (3) the information contained in the connector and **in that** said processor means (8) of the reader appliance (1) are programmed so as to address one or more contacts of the identification connector connected to said appliance in order to obtain the binary data of the discrete element connected to each interrogated contact, said processor means including software means for decoding information relating to characteristics of the engine from the binary data read on the contact(s) of the identification connector (100).

2. An appliance according to claim 1, **characterised in that** the control members comprise at least one button (4) for causing information encoded in the identification connector (100) connected to the reader appliance (1) to be displayed, successive items of information being displayed in response to successive presses on said button.

3. An appliance according to claim 1, **characterised in that** the control members comprise software means enabling information to be displayed automatically.

4. An appliance according to any one of claims 1 to 3, **characterised in that** the identification connector (100) is a multipin connector, and **in that** the connection means of said appliance comprise at least one multipin connector (10) suitable for receiving said identification connector.

5. An appliance according to any one of claims 1 to 4, **characterised in that** the connection means comprise at least one connector (10) for receiving respectively at least one specific model of identification connector.

6. An appliance according to any one of claims 1 to 5, **characterised in that** the processor means (8) include software means (9) for detecting the model of identification connector that is connected to the appliance.

7. An appliance according to any one of claims 1 to 6, **characterised in that** the processor means (8) include software means (9) for testing the parity of the encoding circuit of the identification connector.

8. An appliance according to any one of claims 1 to 7, **characterised in that** it includes at least one protection connector (30) containing an autotest circuit.

9. An appliance according to claim 8, **characterised in that** the processor means (8) include software means for testing said reader appliance from the autotest circuit of the protection connector (30).

10. An appliance according to claim 9, **characterised in that** the control members include at least one button (5) for causing the result of the test of the reader appliance to be displayed.

11. An appliance according to claim 9, **characterised in that** the control members include software means for automatically causing the result of the test of the reader appliance to be displayed.

12. An appliance according to any one of claims 1 to 11, **characterised in that** it includes means for updating the processor means.

13. An appliance according to any one of claims 1 to 12, **characterised in that** it includes self-contained power supply means (6).

## Patentansprüche

1. Gerät (1) zum Lesen von Identifikationssteckern (100), ausgelegt für einen Flugzeugmotor, wobei der Stecker eine Vielzahl von Kontakten (101) umfaßt, die mit einer Decodierungsschaltung verbunden sind, wobei jeder Kontakt einem binären Datum entspricht, wobei eines oder mehrere der binären Daten Informationen über die Merkmale des Motors entsprechen, wobei das Gerät zur Aufnahme wenigstens eines Identifikationsstecker ausgelegte Anschlußmittel (10, 20), Steuerelemente (4, 5), eine Anzeigevorrichtung (3) und Bearbeitungsmittel umfaßt,
**dadurch gekennzeichnet, daß** die Anschlußmittel mit den Bearbeitungsmitteln (8) verbunden sind, die auf die Steuerelemente reagieren, um die in dem Stecker enthaltenen Informationen auf der Anzeigevorrichtung (3) anzuzeigen, und daß die Bearbeitungsmittel (8) des Geräts (1) zum Lesen derart programmiert sind, daß sie einen oder mehrere Kontakte des an das Gerät angeschlossenen Identifikationssteckers adressieren, um das Binärdatum des diskreten Elements zu erhalten, das mit jedem abgefragten Kontakt verbunden ist, wobei die Bearbeitungsmittel Softwaremittel umfassen, um die Informationen über die Merkmale des Motors aus den an dem oder den Kontakten des Identifikationssteckers (100) ausgelesenen Binärdaten zu decodieren.

2. Gerät nach Anspruch 1, **dadurch gekennzeichnet, daß** die Steuerelemente mindestens einen Knopf (4) umfassen, um die Anzeige der in dem an das Gerät (1) zum Lesen angeschlossenen Identifikationsstecker (100) codierten Informationen zu steuern, wobei jede Information nacheinander als Antwort auf ein Drücken auf den Knopf angezeigt wird.

3. Gerät nach Anspruch 1, **dadurch gekennzeichnet, daß** die Steuerelemente Softwaremittel umfassen, die die automatische Anzeige der Informationen ermöglichen.

4. Gerät nach einem der Ansprüche 1 bis 3, **dadurch gekennzeichnet, daß** der Identifikationsstecker (100) ein Mehrfachstecker ist, und daß die Anschlußmittel des Geräts mindestens einen Mehrfachstecker (10) umfassen, der den Identifikationsstecker aufnehmen kann.

5. Gerät nach einem der Ansprüche 1 bis 4, **dadurch gekennzeichnet, daß** die Anschlußmittel mindestens einen Stecker (10) umfassen, um mindestens ein spezifisches Modell eines Identifikationssteckers aufzunehmen.

6. Gerät nach einem der Ansprüche 1 bis 5, **dadurch gekennzeichnet, daß** die Bearbeitungsmittel (8) Softwaremittel (9) umfassen, um das Modell des an das Gerät angeschlossenen Identifikationssteckers zu erfassen.

7. Gerät nach einem der Ansprüche 1 bis 6, **dadurch gekennzeichnet, daß** die Bearbeitungsmittel (8) Softwaremittel (9) umfassen, um einen Paritätstest der Codierschaltung des Identifikationssteckers durchzuführen.

8. Gerät nach einem der Ansprüche 1 bis 7, **dadurch gekennzeichnet, daß** es mindestens einen Schutzstecker (30) umfaßt, der eine Autotestschaltung besitzt.

9. Gerät nach Anspruch 8, **dadurch gekennzeichnet, daß** die Bearbeitungsmittel (8) Softwaremittel umfassen, um einen Test des Geräts zum Lesen auf Basis der Autotestschaltung des Schutzsteckers (30) durchzuführen.

10. Gerät nach Anspruch 9, **dadurch gekennzeichnet, daß** die Steuerelemente mindestens einen Knopf (5) umfassen, um die Anzeige des Resultats des Tests des Geräts zum Lesen zu steuern.

11. Gerät nach Anspruch 9, **dadurch gekennzeichnet, daß** die Steuerelemente Softwaremittel umfassen, um automatisch die Anzeige des Resultats des Tests des Geräts zum Lesen zu steuern.

12. Gerät nach einem der Ansprüche 1 bis 11, **dadurch gekennzeichnet, daß** es Mittel zur Aktualisierung der Bearbeitungsmittel umfaßt.

13. Gerät nach einem der Ansprüche 1 bis 12, **dadurch gekennzeichnet, daß** es autonome Versorgungsmittel (6) umfaßt.
